(19) Europäisches Patentamt
European Patent Office
Office européen des brevets

(11) **EP 2 683 933 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(51) Int Cl.:
*F03B 3/10* *(2006.01)*    *F03D 9/02* *(2006.01)*
*H02J 15/00* *(2006.01)*    *F03B 13/06* *(2006.01)*

(21) Anmeldenummer: **12707985.3**

(22) Anmeldetag: **06.03.2012**

(86) Internationale Anmeldenummer:
**PCT/EP2012/000986**

(87) Internationale Veröffentlichungsnummer:
**WO 2012/119758 (13.09.2012 Gazette 2012/37)**

(54) **PUMPSPEICHERKRAFTWERK**

PUMPED-STORAGE POWER PLANT

CENTRALE HYDROÉLECTRIQUE À ACCUMULATION PAR POMPAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2011 DE 102011013329**

(43) Veröffentlichungstag der Anmeldung:
**15.01.2014 Patentblatt 2014/03**

(73) Patentinhaber: **Roentdek Handels GmbH**
**65779 Kelkheim-Ruppertshain (DE)**

(72) Erfinder:
• **SCHMIDT-BÖCKING, Horst**
**65779 Kelkheim-Ruppertshain (DE)**
• **LUTHER, Gerhard**
**66119 Saarbrücken (DE)**

(74) Vertreter: **Blumbach Zinngrebe**
**Patentanwälte**
**Alexandrastrasse 5**
**65187 Wiesbaden (DE)**

(56) Entgegenhaltungen:
DE-A1- 2 843 675    JP-A- 3 294 662
JP-A- 58 178 878    US-A1- 2005 271 501
US-A1- 2008 041 291    US-B1- 7 743 609

EP 2 683 933 B1

**Beschreibung**

Gebiet der Erfindung

Die Erfindung betrifft ein Pumpspeicherkraftwerk zum temporären reversiblen Speichern von Energie, insbesondere von zeitlich schwankend zur Verfügung stehender Energie aus Windkraftanlagen und/oder Photovoltaikanlagen.

Hintergrund der Erfindung

Die Natur hat es so eingerichtet, dass ein Großteil der solaren Energie, die in den Tropen und Subtropen von der Erdoberfläche absorbiert wird, in Windenergie umgewandelt wird und als solche auf der nördlichen Halbkugel u.a. nach Europa, Atlantik, Nordsee etc. transportiert wird. Pro Quadratmeter Fläche stellt der Wind eine Kraft dar, die im Mittel einer Energieleistung von etwa 1 Kilowatt entspricht. Diese Energie kann der Mensch mit Hilfe von modernen Windkraftanlagen nutzen. Da der Wind jedoch nicht ständig weht, kann eine industrielle Gesellschaft die Windkraft nur dann als verlässliche Energiequelle verwenden, wenn man die so erzeugte elektrische Energie in ausreichendem Maße über den Zeitraum von zumindest Stunden, ggf. Tagen zwischenspeichern kann. Gleiches gilt für elektrische Energie aus Photovoltaikanlagen.

Gelingt eine solche Speicherung in großem Maßstab, so könnten diese regenerativen Energiequellen besser zur Grundlastdeckung eingesetzt werden und eines Tages möglicherweise fossile Energieerzeugung und Kernenergie vollständig ersetzen.

Traditionelle Speicher für Elektrizität, wie Batterien oder Akkus, können nur einen winzigen Bruchteil der benötigten Energie speichern und sind außerdem sehr teuer und daher im großen Stil wirtschaftlich nicht vertretbar. Die heute häufig diskutierten chemischen Speicherverfahren (z.B. Elektrolyse von Wasser) und Druckluft-Speicher haben wegen der Wärmeverluste eine relativ schlechte Effizienz in der Wiedergewinnung der so gespeicherten Energie. Eine Nutzungseffizienz in der Größenordnung von etwa 30% wären für diese Speicherarten schon gute Werte.

Daher verbleiben nach heutigem Stand der Technik nur Wasser-Pumpspeicherkraftwerke (PSKW) um effizient und in großen Maße elektrische Energie zu speichern. Diese können eine Wiedergewinnungseffizienz der gespeicherten Energie von etwa 80% erreichen. Bei diesen Anlagen pumpt man Wasser - zumeist an künstlichen Stauseen - in Zeiten des Stromüberflusses aus einem unteren Speicherbecken in ein oberes Speicherbecken. Je größer die Speicherbecken und je größer der Höhenunterschied ist, desto mehr Energie kann man speichern. Bei Strombedarf lässt man das so hochgepumpte Wasser durch Turbinen wieder zurück in den unteren Speicher fließen. Dabei wird die Differenz der potentiellen Energie des Wassers in elektrische Energie umgewandelt. Die Leistung W ergibt sich aus dem Produkt aus Höhenunterschied h zwischen beiden Speicherbecken und der Wasserdurchflussmenge M. Es gilt (bei einer Dichte des Wassers von 1000 kg/m$^3$) die einfache Formel: W (kW) = 9,81 · M (m$^3$/s) · h (m). Damit ergibt sich die Gesamtkapazität des Energiespeichers mit E (kWh) = 9,81 · M · h · t/3600 (Stunden). t ist die maximale Zeitdauer für das Absenken des Wasserspiegels im oberen Speicherbecken in Stunden. Bei einem Pumpspeicherkraftwerk wechseln Pump-, Speicher- und Stromerzeugungsphasen folglich ständig miteinander ab. Die Pumpspeicherkraftwerke können in kürzester Zeit angefahren werden und so schnell auf Strombedarf reagieren. In Deutschland gibt es heute etwa 30 Pumpspeicherkraftwerke, ihre Standorte liegen wegen der benötigten Höhendifferenz im Mittel- oder gar Hochgebirge und die größten Anlagen in Deutschland sind bei Goldisthal / Thüringen (Leistung etwa 1 Gigawatt und Energie-Speicherkapazität etwa 8,5 GWh bei einem Nutzvolumen von etwa 12 Millionen Kubikmeter) und Markersbach / Sachsen (Leistung etwa 1 Gigawatt und Energie-Speicherkapazität etwa 4 GWh). Insgesamt beträgt die Leistung aller Pumpspeicherkraftwerke in Deutschland zusammen etwa knapp 7 Gigawatt.

Der Bedarf an solchen Pumpspeicherkraftwerken übersteigt jedoch das typischerweise vorhandene Potential und vor allem für die Offshore gewonnene Windenergie werden ortsnahe Energiespeicher gebraucht. Diese Kapazitäten auszubauen, ist daher eine wichtige volkswirtschaftliche Aufgabe (siehe z.B. Energie-Forschungszentrum Niedersachsen, Goslar, http://www.efzn.de). Als mögliche Ausbaukapazitäten werden zurzeit die Errichtung neuer Pumpspeicherkraftwerke in Gebirgen und in alten Bergwerken diskutiert. Die Nutzung von unterirdischen Bergwerksanlagen erfordert einen großen überirdischen Wasserspeicher. Dessen Errichtung scheitert oft an vorhandener Wohnbebauung oder anderer gegebener Nutzung. Außerdem sind die vorhandenen Volumina in Bergwerksanlagen klein und über lange unterirdische Strecken verteilt, so dass leistungsfähige Kraftwerke nur schwierig zu realisieren sind. Die Speicherung erfordert ferner teilweise lange Stromtransportwege und einen schmerzhaften Eingriff in den Natur haushalt. Grundsätzlich ist die Verfügbarkeit von geeigneten Standorten für derartige Pumpspeicherkraftwerke weltweit begrenzt.

Daher wird hier ein völlig anderer, auf den ersten Blick vielleicht unrealistisch erscheinender Ansatz für neue Pumpspeicherkraftwerke vorgestellt.

Aus dem Dokument DE 28 43 675 geht eine Vorrichtung zur Stromerzeugung mittels des hydrostatischen Druckes in einem Gewässer hervor.

Allgemeine Beschreibung der Erfindung

Es ist eine Aufgabe der Erfindung ein neuartiges Pumpspeicherkraftwerk bereit zu stellen, welches nahezu beliebig skalierbar ist und eine enorme Speicherkapazität zur Verfügung stellen kann, ohne die vorhandene Landschaft zu belasten.

Die Aufgabe der Erfindung wird durch den Gegenstand der unabhängige Ansprüche gelöst. Vorteilhafte Weiterbildungen der Erfindung sind in den Unteransprüchen definiert.

Die Erfindung nutzt den Grundgedanken, das Meer als oberes Speicherbecken oder Wasserreservoir eines Pumpspeicherkraftwerkes zu nutzen. Als unteres Speicherbecken oder Wasserreservoir dient ein auf den Meeresboden abgesenkter Druckbehälter. Das untere Wasserreservoir (dasjenige mit der niedrigeren potentiellen Energie) ist demnach ein künstlich erschaffener Hohlraum, der von dem Druckbehälter gebildet wird.

Erfindungsgemäß wird ein Unterwasser-Pumpspeicherkraftwerk zum temporären reversiblen Zwischenspeichern von elektrischer Energie aus anderen Kraftwerken, insbesondere zeitlich schwankend Strom-erzeugenden Kraftwerken, z.B. Windkraftanlagen oder Photovoltaikanlagen, bereit gestellt.

Wie jedes Pumpspeicherkraftwerk benutzt auch dieses Pumpspeicherkraftwerk ein erstes und zweites Wasserreservoir, wobei das Wasser in dem zweiten Wasserreservoir eine höhere potentielle Energie aufweist als in dem ersten Wasserreservoir. Zum temporären reversiblen Speichern der elektrischen Energie wird Wasser von dem ersten Wasserreservoir in das zweite Wasserreservoir gepumpt und zum Wiedergewinnen der elektrischen Energie lässt man das Wasser aus dem zweiten Wasserreservoir in das erste Wasserreservoir zurückfließen, wobei ein Generator die beim "Hochpumpen" deponierte potentielle Energie wieder in elektrische Energie verwandelt. Zum Speichern und Wiedergewinnen der elektrischen Energie kommt es lediglich auf die Differenz der potentiellen Energie einer Wassermenge zwischen den beiden Wasserreservoiren an. Bei einem herkömmlichen Pumpspeicherkraftwerk wird diese durch die Höhendifferenz zwischen den beiden Becken definiert.

Bei der vorliegenden Erfindung wird nun das erste Wasserreservoir mit der niedrigeren potentiellen Energie durch einen künstlichen mit Wasser befüllbaren Druckbehälter gebildet, welcher in großer Tiefe auf den Meeresgrund versenkt wird. Der Druckbehälter ist dabei derart druckfest gebaut, dass er in der erwünschten Meerestiefe formstabil gegen den hydrostatischen Wasserdruck ist, wenn er leergepumpt wird. Das zweite Wasserreservoir mit der höheren potentiellen Energie wird durch das Meer selbst gebildet, welches den Druckbehälter umgibt. Wenn man nun Wasser in den in einer Wassertiefe T versenkten Druckbehälter einströmen lässt, wird diejenige potentielle Energie frei, welche der Höhendifferenz zur Meeresoberfläche, also der Wassertiefe T entspricht. Pumpt man anschließend das Wasser wieder aus dem Druckbehälter gegen den hydrostatischen Druck $P_T$ in der Wassertiefe T in das umgebende Meer, muss man elektrische Energie entsprechend der Wassersäule die auf dem Druckbehälter in der Wassertiefe T lastet aufwenden und kann diese somit speichern; selbstverständlich vermindert um die sonst auch üblichen Verlustleistungen.

Da das Wasser aus dem Druckbehälter ohne nachströmende atmosphärische Luft herausgepumpt wird, und daher ein nur durch den Partialdruck des Wasserdampfes begrenztes Vakuum entsteht, muss streng genommen der atmosphärische Luftdruck noch zum hydrostatischen Druck der Wassersäule hinzuaddiert werden. Quantitativ spielt dies jedoch bei den hier vornehmlich anvisierten großen Meerestiefen keine Rolle mehr; bei einer Anwendung in einem See mit geringer Tiefe sollte man das zusätzliche Bar des Atmosphärendruck, welches einer zusätzlichen Tiefe von 10 m entspricht, jedoch in die Berechnung einbeziehen.

Der Druckbehälter weist hierzu einen Wasserauslass mit einer unmittelbar an dem Druckbehälter angeordneten Pumpe auf. Mit der Pumpe wird das Wasser aus dem Druckbehälter unmittelbar in das umgebende Meer gegen den der Wassertiefe entsprechenden hydrostatischen Druck $P_T$ gepumpt, wobei die Pumpe elektrische Energie in die der verdrängten Wassersäule entsprechende potentielle Energie umwandelt.

Der Druckbehälter weist ferner einen Wassereinlass auf mit einem unmittelbar an dem Druckbehälter angeordneten Generator auf. Beim Einströmenlassen des Wassers unmittelbar aus dem umgebenden Meer mit dem der Wassertiefe entsprechenden hydrostatischen Druck in den Druckbehälter wandelt der Generator die potentielle Energie der zuvor verdrängten Wassersäule wieder in entsprechende elektrische Energie um. Der Druckbehälter weist ferner Ventile am Einlass und Auslass auf, um diese zu verschließen, wenn nicht gerade Energie gespeichert, beziehungsweise zurück gewonnen wird. Das Auspumpen und Einströmen des Wassers erfolgt demnach lediglich auf kurzem Weg durch die Behälterwandung des bis auf den Wassereinlass und Wasserauslass geschlossenen Druckbehälters hindurch.

Wenn man demnach den Druckbehälter in einer Tiefe von z.B. 2000 m unter der Meeresoberfläche versenkt, entspricht dies einem Pumpspeicherwerk, bei welchem das zweite Wasserreservoir 2000 m oberhalb des ersten Wasserreservoirs liegt, was für übliche Pumpspeicherkraftwerke bereits ein außergewöhnlich großer Höhenunterschied wäre. Verblüffenderweise benötigt man trotzdem keine langen Rohre um das zum Speichern der elektrischen Energie verwendete Wasser über eine Strecke von 2000 m (bei ungleich 90° Steigung sogar noch mehr) zu transportieren. Es genügt nämlich, das Wasser vom Inneren des Druckbehälters lediglich nach außen in das umgebende Meer zu pumpen, was nur eine Strecke von einigen wenigen Metern bedeutet und entsprechend wieder zurückströmen zu lassen. Diese kurze Pumpstrecke ist nämlich unabhängig von der Potentialdifferenz. Man benötigt daher lediglich elektrische Leitungen zum Transport der elektrischen Energie von der Meersoberfläche zu dem Druckbehälter und zurück. Die von der Gravitation verursachte Potentialdifferenz wird nämlich ohne Überwindung dieser Wegstrecke allein durch die in der Wassertiefe T auf dem Druckbehälter lastende Wassersäule aufgebracht. Es werden daher weder Rohre zum Transport von Wasser noch Luftleitungen zwischen dem Druckbehälter und der Meeresoberfläche benötigt. Man nutzt einfach die Potentialdifferenz der Meerestiefe, wobei nicht ausgeschlossen sein soll, dass das Pumpspeicherkraftwerk in einem tiefen Binnensee versenkt wird.

Mit der Erfindung wird darüber hinaus eines der zwei Speicherbecken oder definierten Wasserreservoire völlig "eingespart", da das umgebende Meer selbst das zweite Wasserreservoir (mit der höheren potentiellen Energie) bildet. Das erste Wasserreservoir wird von dem inneren Hohlraum des Druckbehälters oder Drucktanks gebildet. Somit bildet der Drucktank ein abgeschlossenes Wasser-Speichervolumen, nämlich dasjenige Wasser-Speichervolumen oder Wasserreservoir mit der niedrigeren potentiellen Energie gegenüber dem umgebenden Meer. Dadurch werden lange Wasserrohre, die bei herkömmlichen Pumpspeicherkraftwerken die Höhendifferenz überbrücken müssen eingespart. Dies vereinfacht nicht nur den Aufbau, sondern es werden auch Reibungsverluste beim Transport des Wassers reduziert, wodurch der Wirkungsgrad erhöht werden kann. Mit anderen Worten sind der Wassereinlass und/oder der Wasserauslass bzw. ein kombinierter Wassereinlass/-auslass insbesondere unmittelbar an dem Druckbehälter, d.h. ohne lange Schläuche oder Rohre, z.B. zur Wasseroberfläche angeordnet. Ferner können derartige Druckbehälter in großer Zahl auf dem Meeresgrund versenkt werden, um ein hinreichend großes Wasser-Speichervolumen und damit die erwünschte Energie-Speicherkapazität zu erreichen ohne die oberirdisch nutzbare Landschaft zu belegen. Bei einer Vielzahl von Pumpspeicherkraftwerken ist jeder der Druckbehälter vorzugsweise selbst mit Pumpe(n) und Generator(en) versehen, so dass die Druckbehälter lediglich elektrisch miteinander verbunden werden zu brauchen. Vorzugsweise umfasst ein solches Netz aus Unterwasser-Pumpspeicherkraftwerken demnach eine Mehrzahl von auf dem Meeresgrund befindlichen Druckbehältern, welche auf dem Meeresgrund mit einem Netzwerk aus elektrischen Leitungen elektrisch miteinander verbunden sind. Eine Vernetzung mit Wasserrohren zwischen den jeweils mit eigener Pumpe und Generator ausgestatteten Druckbehältern ist nicht notwendig.

Alternativ ist auch der Fall denkbar, dass ein bauseitig (der Druckbehälter ist ein auf dem Meeresboden liegendes Bauwerk mit im gefüllten Zustand erheblichem Eigengewicht) und konstruktiv optimaler Druckbehälter für die Leistungsfähigkeit geeigneter Pump- und Turbinenaggregate zu klein ist. Dann lassen sich mehrere Druckbehälter hydraulisch durch Druckleitungen zu einer Gruppe zusammenschalten und die Befüllung und Entleerung erfolgt nur an einem einzigen Punkt in der Gruppe. Natürlich müssen die hydraulischen Verbindungen so beschaffen sein, dass ein unbehindertes Zu- und Abfließen des Wassers ermöglicht wird.

Der Druckbehälter im Vorzugsfall bzw. die Gruppe der hydraulisch zusammengeschlossenen Druckbehälter im Alternativfall sollte ein Volumen aufweisen, welches eine signifikante Energiespeicherung ermöglicht, das Volumen sollte daher mindestens 100 oder 1000 Kubikmeter betragen, kann aber um ein Vielfaches, ggf. mehrere Größenordnungen größer sein. Es sind sogar Volumina im Bereich von einer Million Kubikmeter oder mehr denkbar. Je größer die einzelnen Druckbehälter sind, umso geringer ist die benötigte Anzahl.

Beispielsweise können große industriell gefertigte Kugeltanks als Druckbehälter verwendet werden. Ein Kugeltank mit 100 Metern Durchmesser hat ein Volumen von etwa 500.000 Kubikmeter. Lässt man 50 Kubikmeter Wasser pro Sekunde durch die Turbinen strömen, dann liefert dieses Pumpspeicherkraftwerk bei 2000 m Wassertiefe eine Leistung von etwa 1 Gigawatt für eine Zeitdauer von etwa 3 Stunden. Durch Verwendung von mehreren solcher Kugeltanks kann diese Leistung entsprechend erhöht und eine noch größere Speicherkapazität erreicht werden. Die Speicherung von regenerativ erzeugter Energie ist hiermit in großen Mengen möglich.

Zweckmäßigerweise bestehen die Druckbehälter aus Stahl und/oder Beton, insbesondere Stahlbeton, d.h. weisen eine entsprechende dreidimensional geschlossene Außenwandung z.B. aus Stahlbeton auf. Hiermit lässt sich ein hinreichend druckfester Druckbehälter bzw. Hohlkörper bauen.

Vorzugsweise wird der Druckbehälter so massiv gebaut bzw. beschwert, dass er im ausgepumpten Zustand im Normalbetrieb eine Masse hat, die etwas größer ist, als die Masse des von dem Druckbehälter verdrängten Wassers, so dass der Druckbehälter auch im ausgepumpten Zustand im Normalbetrieb im Meer nach unten sinkt, so dass sich der Verankerungsaufwand auf dem Meeresgrund in Grenzen hält. Ggf. kann der Druckbehälter sogar ohne wesentliche Verankerung einfach auf dem Meeresgrund liegen, wenn er in jedem Füllzustand im Normalbetrieb schwer genug ist. Dennoch soll nicht ausgeschlossen sein, dass der Druckbehälter geringfügig leichter als das verdrängte Wasser ist und der Druckbehälter am Meeresgrund verankert wird.

In vorteilhafter Weise weist der Druckbehälter separate Hohlräume auf, z.B. in der Behälterwand, wobei Schüttgut als Beschwerungsmaterial in die Hohlräume eingefüllt werden kann. Hiermit kann die Masse des Druckbehälter im Nachhinein noch angepasst werden, um den Druckbehälter so zu beschweren, dass er auf den Meeresgrund sinkt. Besonders vorteilhaft ist es aber, den Druckbehälter mit dem Schüttgut zunächst so auszutarieren, dass er gerade noch schwimmt und dann vor Ort auf dem Meer zusätzliches Ballastwasser einzufüllen. Das Beschwerungsmaterial kann in kostengünstiger Weise natürliches Schüttgut sein, z.B. Sand, Kies, Schlick oder Ähnliches, dessen Masse vor Ort mit in das Schüttgut eingebrachtem Wasser zusätzlich vergrößert werden kann, um die Masse des Druckbehälter vor Ort noch genauer auszutarieren. Durch das Einbringen von Ballastwasser in das Schüttgut kann die Masse soweit erhöht werden, dass das Pumpspeicherkraftwerk versinkt, es können aber auch separate Hohlräume mit Ballastwasser gefüllt werden, damit das Ballastwasser einfacher wieder herausgepumpt werden kann, um das Pumpspeicherkraft wieder aufzuholen. Der Gesamt-Ballast ist jedenfalls so bemessen, dass er den Druckbehälter im Normalbetrieb auf dem Meeresgrund hält. Die Gewichtsverteilung, z.B. die Anordnung des Ballasts sollte insbesondere bei einer Kugel asymmetrisch sein, damit der Druckbehälter unter Wasser eine definierte Orientierung mit Unter- und Oberseite aufweist, was die Anordnung der Pumpen und Generatoren erleichtert.

Gemäß einer bevorzugten Ausführungsform der Erfindung weist der Druckbehälter einen im Normalbetrieb nicht zum Energiespeichern verwendeten zusätzlichen Wasserspeicherbereich auf, welcher leergepumpt werden kann, um die Masse des Speicherreservoirs derart zu verkleinern, dass es vom Meeresgrund an die Meeresoberfläche aufgeholt werden kann. Dieser zusätzliche Wasserspeicherbereich kann entweder dadurch geschaffen werden, dass die Hauptkavität im Normalbetrieb nicht vollständig leergepumpt wird, es können aber auch ein oder mehrere separate Hohlräume, ggf. in der Behälterwandung, hierfür vorhanden sein. Somit kann durch das Leerpumpen des zusätzlichen Wasserspeicherbereichs die Masse des Druckbehälter soweit reduziert werden, dass der Druckbehälter von selbst auftaucht oder zumindest mit einem Seil aufgeholt werden kann. Der Druckbehälter, der das Wasser-Speichervolumen mit der niedrigeren potentiellen Energie bildet, ist demnach auf den Meeresgrund absenkbar und wieder zur Wasseroberfläche aufholbar. In vorteilhafter Weise können somit regelmäßig Wartungs- oder Reparaturarbeiten an der Oberfläche durchgeführt werden.

Zweckmäßig hat der Druckbehälter die Form einer Kugel. Der Druckbehälter kann jedoch auch in Form eines Torus aus einem in sich selbst geschlossenen Ring aus druckfesten Rohren oder zylindrisch, ggf. mit gewölbten Endflächen ausgebildet sein. Ein Torus hat den Vorteil, dass er auf dem Meeresgrund nicht wegrollen kann. Auch eine Ei-Form kann diesbezüglich vorteilhaft sein.

Der Wassereinlass und Wasserauslass können getrennt oder kombiniert ausgebildet sein. In letzterem Fall sind Pumpe und Generator vorzugsweise als eine gemeinsame Pumpturbine ausgebildet. In diesem Fall genügt ggf. ein gemeinsames Ventil am kombinierten Wassereinlass und -auslass. Hierdurch werden die Anzahl der Durchbrüche in der Außenwand des Druckbehälters und die Anzahl der Ventile reduziert, wobei nichtsdestotrotz eine Mehrzahl an Pumpturbinen vorhanden sein kann.

Mit dem erfindungsgemäßen Unterwasser-Pumpspeicherkraftwerk kann somit ein Stromversorgungsnetz geschaffen werden, welches Folgendes umfasst:

Eine Vielzahl von Kraftwerken, die zeitlich schwankend elektrische Energie erzeugen, insbesondere Windkraftwerke und/oder Photovoltaikanlagen,
ein oder mehrere erfindungsgemäße Unterwasser-Pumpspeicherkraftwerke,
eine Vielzahl von Verbrauchsstellen für elektrische Energie und
ein elektrisches Leitungsnetz, welches die Verbrauchsstellen, die Unterwasser-Pumpspeicherkraftwerke und die Kraftwerke miteinander verbindet, so dass die von den Kraftwerken erzeugte elektrische Energie zu Zeiten eines Energieüberschusses aus den Kraftwerken von den Unterwasser-Pumpspeicherkraftwerken reversibel zwischengespeichert und zu Zeiten hohen Bedarfs an elektrischer Energie zurückgewonnen und die zurückgewonnene elektrische Energie zu den Verbrauchsstellen geleitet werden kann.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

<u>Kurzbeschreibung der Figuren</u>

Es zeigen:

Fig. 1 eine schematische Darstellung eines erfindungsgemäßen Unterwasser-Pumpspeicherkraftwerks mit Windkraftanlage und Verbraucher,
Fig. 2 eine schematische Darstellung des Unterwasser-Pumpspeicherkraftwerks aus Fig. 1 beim Speichern von Energie,
Fig. 3 eine schematische Darstellung des Unterwasser-Pumpspeicherkraftwerks aus Fig. 1 beim Zurückgewinnen der Energie,
Fig. 4 eine schematische Darstellung einer weiteren Ausführungsform des Unterwasser-Pumpspeicherkraftwerks,
Fig. 5 eine schematische Darstellung einer weiteren Ausführungsform des Unterwasser-Pumpspeicherkraftwerks,
Fig. 6 eine schematische Darstellung einer alternativen Form des Druckbehälters,
Fig. 7 ein schematischer Querschnitt durch einen torischen oder zylindrischen Druckbehälter,

Fig. 8    eine schematische Darstellung eines Stromversorgungsnetzes mit einer Vielzahl an Kraftwerken, Unterwasser-Pumpspeicherkraftwerken und Verbrauchern.

Detaillierte Beschreibung der Erfindung

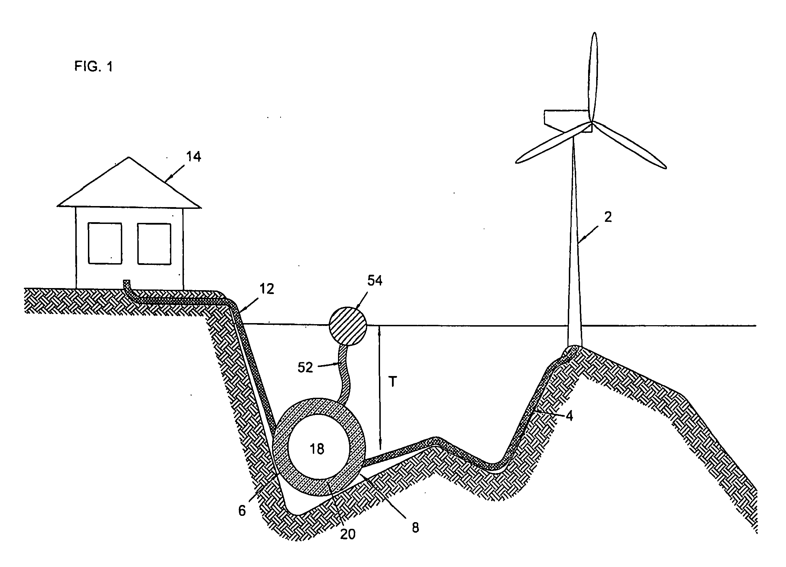

Bezug nehmend auf Fig. 1 wird elektrische Energie symbolisch mittels eines bestimmten elektrischen Kraftwerks, in diesem Beispiel eines Windkraftwerks 2 erzeugt. Das Windkraftwerk 2 ist mit einer Stromleitung 4 mit dem Pumpspeicherkraftwerk 6 verbunden, um die elektrische Energie aus dem Primärkraftwerk zu dem Pumpspeicherkraft 6 zu leiten. Das Pumpspeicherkraftwerk 6 liegt in einer Wassertiefe T, welche je nach den vorhandenen geographischen Gegebenheiten einige hundert bis einige tausend Meter betragen kann, auf dem Meeresgrund 8. Das Pumpspeicherkraftwerk 6 ist ferner mit einer Stromleitung 12 mit einem Verbraucher 14 verbunden, um die elektrische Energie aus dem Pumpspeicherkraftwerk 8 zu dem Verbraucher zu leiten.

Es ist ersichtlich, dass das dargestellte Windkraftwerk 2 stellvertretend für eine Vielzahl von Windkraftwerken stehen kann und auch andere regenerative fluktuierende Kraftwerke wie Photovoltaik-Anlagen etc. zum Einsatz kommen können. Ferner steht der Verbraucher 14 stellvertretend für eine Vielzahl von Verbrauchern, die an den vorhandenen Teil des allgemeinen Stromversorgungsnetzes angeschlossen sind, in welches die zurückgewonnene elektrische Energie aus dem Pumpspeicherkraftwerk 6 eingespeist wird, wenn der Bedarf die von den Primärkraftwerken bereit gestellte Leistung übersteigt. Die eingezeichneten Stromleitungen 6 und 12 stehen stellvertretend für die Anbindung an das allgemeine Stromversorgungsnetz mit seiner Einbindung von Stromquellen und Stromsenken.

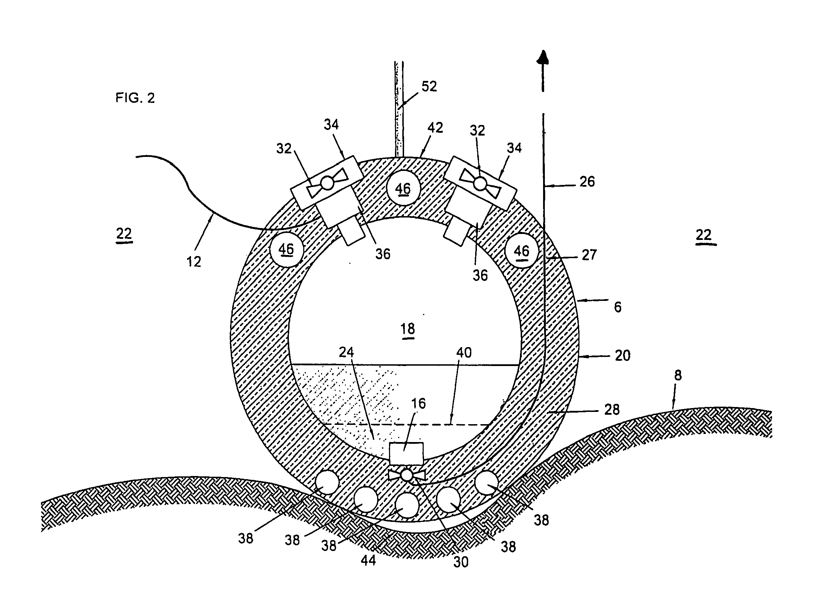

Bezug nehmend auf Fig. 2 wird im Speicherbetrieb mittels einer Pumpe 16 Wasser aus der inneren Kavität 18 des Druckbehälters oder Drucktanks 20 in das umgebende Meer 22 gepumpt. Die Pumpe 16 saugt das Wasser aus dem Pumpensumpf 24 an und pumpt das Wasser durch einen Wasserauslass 26 direkt in das umgebende Meer. Die innere Kavität 18 des künstlichen Druckbehälters 20 bildet demnach eines der beiden Wasserreservoire des Pumpspeicherkraftwerks (und zwar dasjenige mit der niedrigeren potentiellen Energie).

Der Wasserauslass umfasst in diesem Beispiel eine Wasserleitung 27, die innerhalb der Stahlbetonwandung 28 des Druckbehälters 20 nach oben verläuft. Der Wasserauslass 26 ist unmittelbar an dem Drucktank 20 angeordnet, d.h. die Wasserleitung 27 endet unmittelbar außerhalb des Drucktanks 20 und führt z.B. nicht zur Meeresoberfläche. Der Wasserauslass 26 bzw. die Wasserleitung 27 können mit einem Absperrventil 30 geschlossen werden. Dadurch dass die Pumpe 16 das Wasser gegen den in der Wassertiefe T herrschenden hydrostatischen Druck $P_T$ pumpen muss, wird eine große Menge an elektrischer Energie verbraucht und in potentielle Energie umgewandelt, wie durch die folgenden Beispiele verdeutlicht wird. Der Druckbehälter 20 speichert eine Energiemenge E in Kilowattstunden als Funktion des Volumens V des speicherbaren Wassers in Kubikmetern und der Wassertiefe T in Metern und bei einer Dichte des Wassers von 1000 kg/m$^3$:

$$E \ (kWh) = V \ (m^3) \ x \ T \ (m) \ x \ 9,81/3600$$

In einem Beispiel mit einem Volumen V = 10.000 m$^3$, einer Wassertiefe T = 2000 m und einem Druckbehälter 20 in Kugelform und einem Kavitätsdurchmesser von 28 m kann elektrische Energie E von etwa E = 58.000 kWh = 58 MWh gespeichert werden. Das bedeutet, dass eine Leistung von etwa 10 Megawatt über einen Zeitraum von 6 Stunden abgegeben werden kann. Bei einem täglichen Zyklus des Wiederaufladens des Pumpspeichers durch Wind- oder Photovoltaikstrom, d.h. tägliches Befüllen und Auspumpen des Speichervolumens V ergibt sich pro Jahr eine gespeicherte Energiemenge von etwa 20.000 MWh.

Es erscheint allerdings möglich, sogar noch größere Druckbehälter 20 zu bauen. Bei einem kugelförmigen Druckbehälter 20 mit einem Durchmesser von 280 m ergibt sich etwa ein Volumen V = 10.000.000 m$^3$. Bei einer wiederum angenommenen Versenktiefe T = 2.000 m kann etwa eine Energiemenge E = 58.000 MWh gespeichert werden. Dies entspricht einer Leitung von etwa 5 Gigawatt über eine Zeitdauer von etwa 12 Stunden. D.h. mit einer solchen Druck-Speicherkugel 20 könnte die Energiemenge, die etwa 1000 Windkraftanlagen 2 einer Leistung von jeweils 6 Megawatt über einen Zeitraum von fast 10 Stunden erzeugen, gespeichert werden. Bei einem täglichen Zyklus des Wiederaufladens des Speichers durch Windenergie, d.h. tägliches Befüllen und Auspumpen des Speichervolumens ergibt sich pro Jahr eine gespeicherte Energiemenge von etwa 20.000 GWh.

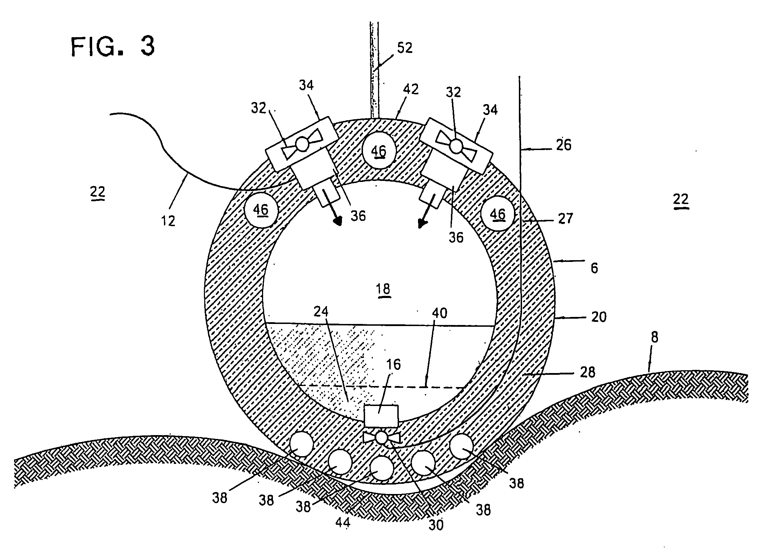

Bezug nehmend auf Fig. 3 wird zum Wiedergewinnen der in dem leergepumpten Druckbehälter 20 des Pumpspeicherkraftwerks 6 gespeicherten Energie ein Zulaufventil 32 geöffnet und das Wasser strömt durch einen Wassereinlass 34 aus dem umgebenden Meer mit dem der Wassertiefe T entsprechenden hydrostatischen Druck $P_T$ durch eine Turbine 36 in die innere Kavität 18 des Druckbehälters 20, wobei die beim Auspumpen gespeicherte Energie abzüglich der üblichen Leistungsverluste wieder gewonnen werden kann. Der Wassereinlass 34 ist unmittelbar an dem Drucktank 20 angeordnet, d.h. es führt z.B. kein Rohr zur Meeresoberfläche. Die wieder gewonnene elektrische Energie wird durch die Stromleitung 12 in das allgemeine Stromversorgungsnetz eingespeist. Um die Leistung zu erhöhen, können mehrere Wassereinlässe 34 mit Ventilen 32 und Turbinen 36 vorhanden sein, in diesem Beispiel sind es jeweils zwei. Um Schwingungen des Druckbehälters aufgrund des großen Wasserflusses zu vermeiden, kann die innere Kavität 18 mit Streben durchsetzt sein (nicht dargestellt). Die Quer-Streben können dabei eine Doppelfunktion erfüllen, nämlich einerseits den Druckbehälter zu stabilisieren und andererseits Turbulenzen in dem durch den Generator 36 in die innere Kavität 18 einströmenden Wasser zu erzeugen, um Resonanzschwingungen im Druckbehälter 20 zu verhindern.

Der Druckbehälter 20 besteht aus einer kugelförmigen Stahlbetonwandung 28. Die Wandstärke wird in Abhängigkeit der Wassertiefe T gewählt, in welche das Pumpspeicherkraftwerk 6 versenkt wird und in Abhängigkeit der notwendigen Masse, damit es noch versenkt werden kann. Die Turbinen 36 und die Pumpen 16 sind unmittelbar an dem Druckbehälter 20 angeordnet, z.B. innerhalb der Wandung 28 oder unmittelbar an der Wandung 28. Zum Speichern und Wiedergewinnen der elektrischen Energie wird das Wasser lediglich über eine kurze Distanz, nämlich lediglich durch die Ein- bzw. Auslassöffnungen 34, 26, d.h. Durchbrüche in der Wandung 28 des Druckbehälters 20 geleitet. Das Pumpspeicherkraftwerk 6 benötigt demnach lediglich elektrische Leitungen 4, 12 von der Meeresoberfläche auf den Meeresgrund 8, nicht jedoch Rohre oder Leitungen zum Transport von Wasser. Ggf. kann sogar eine elektrische Leitung als Stromzuleitung und -ableitung genügen. Weiter vorteilhaft ist, dass die Druckdifferenz aufgrund der großen Wassertiefe nicht stark vom Füllstand innerhalb des Druckbehälters 20 abhängig ist, so dass die bereit stehende Leistung unabhängig vom Füllstand im Wesentlichen konstant ist.

Der Druckbehälter 20 weist in seiner Wandung 28 Hohlräume 38 auf, welche mit Schüttgut, z.B. Sand gefüllt sind, um die Masse des Pumpspeicherkraftwerks 6 auszutarieren. Der Sand kann ggf. in einem Ring koaxial um die druckfeste Hülle oder in anderen Beschwerungsbereichen angebracht werden. Das Pumpspeicherkraftwerk 6 wird vorzugsweise zunächst so austariert, dass es gerade noch schwimmt, wenn es vollständig leergepumpt ist, so kann es mit einem Schiff an die Stelle transportiert werden, an der es versenkt werden soll. Anschließend wird an der Versenkstelle der Druckbehälter 20 mit Ballastwasser soweit beschwert, dass das Pumpspeicherkraftwerk 6 versinkt. Die als Ballastwasser verwendete Wassermenge dient lediglich der Beschwerung und wird im Normalbetrieb, d.h. beim Speichern und Wiedergewinnen der elektrischen Energie, nicht herausgepumpt, damit das Pumpspeicherkraftwerk 6 im Normalbetrieb immer eine größere Masse als das verdrängte Wasser besitzt und somit auf dem Meeresgrund 8 liegen bleibt. Der entsprechende Speicherbereich ist in dem dargestellten Beispiel mit der gestrichelten Linie 40 markiert. Der Speicherbereich 40 für das Ballastwasser kann aber auch durch separate Hohlräume gebildet werden (nicht dargestellt). Z.B. für Wartungsarbeiten kann das zusätzliche, im Normalbetrieb nicht zum Energiespeichern vorgesehene Ballastwasser aber herausgepumpt werden, so dass das Pumpspeicherkraftwerk 6 wieder auftaucht oder zumindest so leicht wird, dass es z.B. mit dem Seil 52, welches an der Meeresoberfläche mit einer Schwimmboje 54 markiert ist, aufgeholt werden kann.

Insbesondere bei einer Kugelform ist die Gewichtsverteilung des Druckbehälters 20, z.B. durch Anordnung der Hohlräume 38 asymmetrisch ausgebildet, so dass der Druckbehälter aufgrund der Gewichtsverteilung eine definierte Orientierung mit einer Oberseite 42 und einer Unterseite 44 aufweist. In dem vorliegenden Beispiel sind hierzu die oberen Hohlräume 46 leer, um Auftrieb zu erzeugen und die unteren Hohlräume 38 sind gefüllt. Vorzugsweise sind die Wassereinlässe 34 und die Turbinen 36 an der Oberseite 44 angeordnet, so dass das Wasser von der Oberseite her einströmt. Der Pumpensumpf 24 ist an der Unterseite 42 angeordnet und die Pumpe 16 ist entweder direkt am Pumpensumpf 24 an der Unterseite 42 des Druckbehälters 20 angeordnet oder mit einem Rohr mit dem Pumpensumpf verbunden (nicht dargestellt).

Wegen des immens großen Gewichtes des Druckbehälters 20 bietet es sich an, den Druckbehälter schwimmend im Wasser zu bauen, z.B. in schwimmendem Zustand abschnittsweise sukzessive aus Stahlbeton zu gießen. Dabei sollte der unfertige Druckbehälter während der Herstellung soweit aus dem Wasser ragen, dass auch bei einem Sturm ein Volllaufen seines Innenhohlraums 18 nicht möglich ist. Die Dicke der Wandung 28 des Druckbehälters 20 muss einmal den extrem großen hydrostatischen Wasserdruck aushalten und zudem dem Druckbehälter 20 ein so hohes Eigengewicht geben, dass das Pumpspeicherkraftwerk 6 mit zumindest nahezu leerem Innenhohlraum 18 auf den Meeresboden 8 absinkt. Als Wandmaterial kommt z.B. Stahlbeton in Frage. Die Statik wird so ausgeführt, dass der Druckbehälter 20 ohne Beschädigung wesentlich höhere Drücke aushalten kann, als auf dem Meeresgrund 8 vorhanden sind. In die Wandung 28 werden alle System-relevanten Komponenten wie Ventile 30, 32, Turbinen 36, Pumpen 16, Rohre 27 und/oder elektrische Leitungen usw. integriert, so dass sie später ihre Funktion auf viele Jahrzehnte erfüllen können. Die Kontroll- und Steuerelektronik ist ebenfalls unmittelbar an dem Druckbehälter 20 angeordnet und wird mit versenkt.

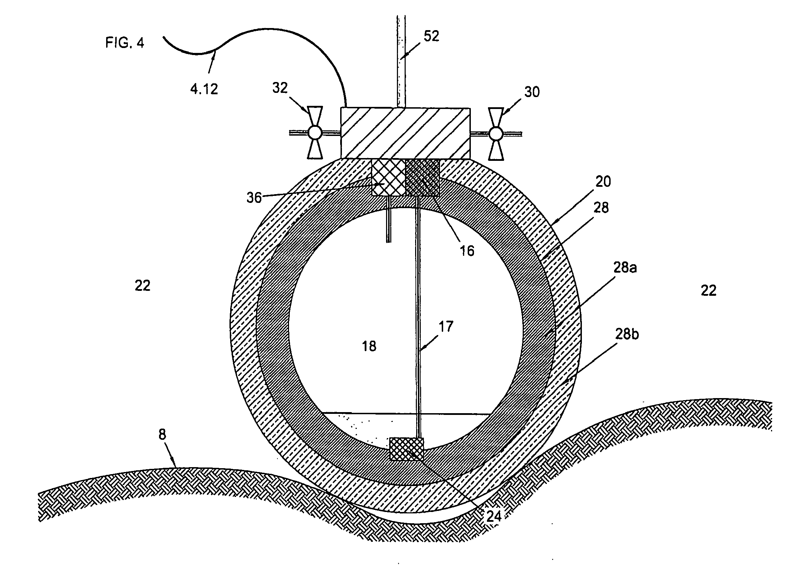

Fig. 4 zeigt eine alternative Ausführungsform des Pumpspeicherkraftwerks 6, bei welchem die Pumpe 16 an der Oberseite 42 des Druckbehälters 20 angeordnet ist und mittels eines Saugrohres 17 innerhalb der Kavität 18 das Wasser aus dem Pumpensumpf 24 ansaugt. Die Außenwandung 28 ist zweischalig aufgebaut, wobei die innere Schale 28a die druckfeste Hülle des Druckbehälters 20 bildet und die äußere Schale 28b im Wesentlichen lediglich als Ballastmasse wirkt.

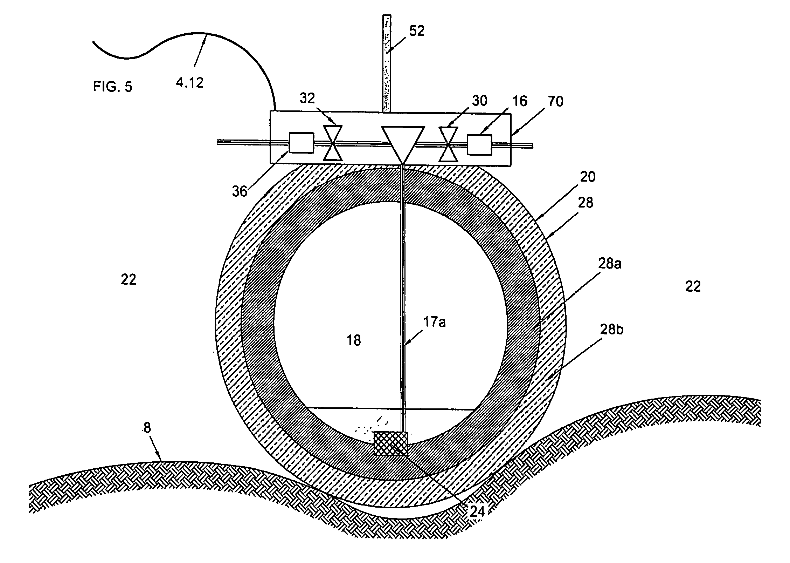

Fig. 5 zeigt eine weitere alternative Ausführungsform des Pumpspeicherkraftwerks 6 und stellt eine Vereinfachung und Modifikation der Ausführungsform gemäß Fig.4 dar. Die Pumpe 16, der Generator 36 und die Ventile 30 und 32 werden zu einer kompakten Pump-Generator-Einheit 70 außerhalb der druckfesten Schale 28a zusammengefasst. Die Ventile 30 und 32, von denen sowohl beim Pump- als auch beim Generatorbetrieb immer nur eines geöffnet und das andere geschlossen ist, münden auf ein T-Stück 71, das mit einer in die Kavität 18 hineinführenden kombinierten Ansaug-und Auslass-Leitung 17a verbunden ist. Diese Leitung 17a wird je nach Betriebsfall als Ansaugleistung für die Pumpe 16 oder als Auslassleitung für die Turbine 36 benutzt. Der Pumpensumpf 24 kann so gestaltet werden, dass er auch als Auslaufmündung für den aus der Turbine austretenden Wasserstrom dient. Die Vorteile dieser Anordnung bestehen darin, dass

- nur eine einzige Durchbohrung der druckfesten Schale 28a erforderlich ist.
- - die empfindlichen Maschinenteile (Pumpe, Generator, Ventile) in einer kompakten Einheit als Baugruppe zusammengefasst werden und nur an einer Stelle an das Speicherreservoir angekoppelt werden. Im Reparaturfall kann dann die Pump-Generator-Einheit 70 einfach abgekoppelt werden und separat an die Meeresoberfläche gezogen werden.

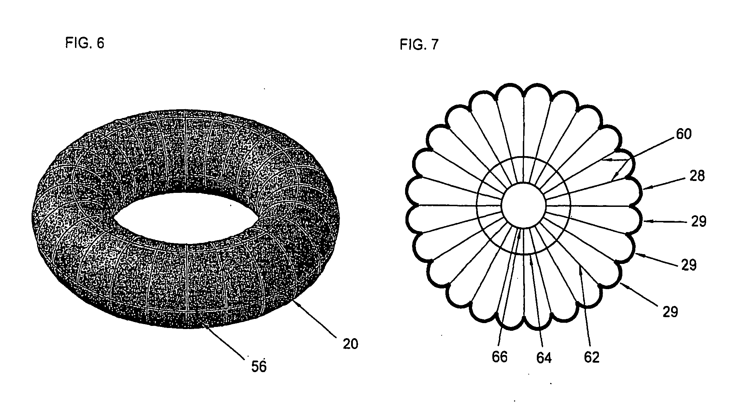

Fig. 6 zeigt eine alternative Ausführungsform des Druckbehälters 20 in Torusform. Ein torusförmiger Druckbehälter 20 ist ebenfalls druckstabil, wenn er aus einem in sich selbst geschlossenen Ring aus druckfesten Rohrstücken 56 besteht, kann aber auf dem Meeresgrund 8 nicht wegrollen, wenn er liegt. Diese Rohrstücke können baustatisch optimiert werden, z.B. durch Aussteifung mit Speichen so dass sich die Form eines "Rades" ergibt. Als Baumaterial der Speichen kommen ebenfalls Beton und Stahl in Betracht.

Ein Vorteil eines solchen Druckbehälters gegenüber sonstigen Bauwerken besteht darin, dass an das lichte Volumen keine besonderen Ansprüche gestellt werden. Es reicht aus, dass das Wasser ohne nennenswerte hydraulische Behinderung zum Pumpensumpf fließen kann. Außerdem können mögliche Bewegungen und Schwingungen des Gesamtkörpers durch besondere Auslegung einzelner Ringe aufgefangen werden. Ähnliche Überlegungen werden auch bei den riesigen Türmen (Größenordnung: 1000m Höhe, 100m Durchmesser) angestellt, die für die Verwirklichung von Aufwindkraftwerken zur Nutzung der Sonnenenergie konzipiert wurden.

Fig. 7 zeigt einen Querschnitt durch eine Rohrscheibe eines torischen oder zylindrischen Druckbehälters, welcher durch eine innere Tragestruktur 60 stabilisiert und gestützt wird. Die äußere wasserdichte Hülle 28 setzt sich aus aneinandergefügten Teil-Zylindern 29 zusammen. Ihre gewölbte Form ermöglicht es, bei gleicher Materialstärke einen höheren Druck aufzunehmen. Der Druck wird dann durch das Tragewerk 60 aufgenommen. Dieses Tragewerk 60 muss nach den Regeln der Baustatik optimiert werden. Im Vergleich zu herkömmlichen Bauwerken ergeben sich jedoch aus dem Zweck und der Umgebung des Hohlkörpers besondere Bedingungen, die die Konstruktion erleichtern:

- An das Innere des Druckbehälters wird nur die Anforderung gestellt, dass das Wasser ohne bedeutsame hydraulische Verluste zum Pumpensumpf 24 fließen kann. Es müssen also keine "leeren Hallen" konstruiert werden, sondern Druckbehälter, die gleichsam ein stützendes Gerüst aus baustatisch optimiertem Tragwerk behalten dürfen. Dadurch ergibt sich eine neuartige große Vielfalt möglicher Tragwerk-Konstruktionen, die von Schüttungen mit hoher Porosität ähnlich einer Vakuum-Verpackung bis zu filigranen technischen Strukturen reicht.

- Der Druckbehälter befindet sich in einer praktisch thermostatisierten Umgebung, da das Tiefenwasser des Meeres eine außerordentliche Temperaturkonstanz besitzt, die sich selbst in geologischen Zeiträumen nur wenig ändert. Da das Speichervolumen 18 mit Umgebungswasser gefüllt wird, ändert sich seine Temperatur auch nicht betriebsbedingt. Die durch die Druckentlastung des durch die Turbine in den Druckbehälter hinein fließenden Wassers bewirkte Temperaturänderung ist sehr gering.

- Der Druckbehälter befindet sich in einer ruhigen Umgebung ohne "Stürme" oder äußere Strömungen. In seine Umgebung kann lediglich durch seine Befüllung oder Leerung etwas Unruhe kommen. Durch eine ausreichend lange und günstig geformte Leitung für den Auslass der Pumpe bzw. den Zulauf der Turbine kann diese selbst erzeugte Strömungsunruhe jedoch kontrolliert werden. Zulauf und Auslauf können auch in einer einzigen Leitung zusammen gefasst werden, da der Hohlkörper nicht gleichzeitig befüllt und entleert wird..

Fig. 7 zeigt eine symbolische Tragwerk-Konstruktion 60 mit radialen Streben 62 zur Aufnahme der radialen Kräfte und umlaufenden Verbindungen 64 zwischen den Streben 62 zur Aufnahme von seitlichen Kräften und Verhinderung des Knickens der Streben 62. Die umlaufenden Verbindungen 64 kann man sich auch als Schalen oder Rohrmantel vorstellen, die den Einsatz von kurzen Streben 62 zwischen radialen Ebenen ermöglichen. Die Streben 62 werden innen durch einen inneren Zylinder 66 aufgefangen.

Auch die bei der Konstruktion eines Rades gewonnenen Erkenntnisse zur Optimierung der Anordnung und Struktur von Speichen lassen sich auf die Struktur des Tragwerks für den Speicherhohlkörper übertragen. Wegen der großen Abmessungen des Hohlkörpers könnten auch mehrere koaxiale Ebenen durch Speichenkonstruktionen miteinander verbunden werden.

Eine weitere mögliche Ausformung des Hohlkörpers kann darin bestehen, dass der Druckbehälter 20 mit Füllkörpern gefüllt ist, deren oberste Schicht sich aus glatten Elementen zusammensetzt, über die eine wasserdichte und reißfeste aber noch etwas elastische Hüllschicht angeordnet wird (ähnlich einer Vakuumverpackung). Die Schüttung der Füllkörper muss eine hohe Porosität aufweisen und die Wasserwege müssen so beschaffen sein, dass der hydraulische Widerstand klein genug ist, um noch eine ausreichende Strömungsgeschwindigkeit ohne zu hohe Reibungsverluste beim Einströmen und Auspumpen des Wassers zu erlauben. Kieselsteine, deren Abmessungen zur Erhöhung der Porosität möglichst ähnlich sein sollten, wären beispielsweise als Füllkörper geeignet. Es ist z.B. folgendes Verfahren denkbar: Ein dünnwandiger außen glatter Hohlkörper, dessen Mantel mit Sollbruchlinien überzogen ist, wird mit Füllkörpern gefüllt. Über dem Mantel des Hohlkörpers befindet sich eine etwas elastische Hülle. Nun wird diese Gebilde unter hohen äußeren hydrostatischen Druck gesetzt. Der temporäre Hohlkörper bricht an zumindest einem Teil der Sollbruchlinien, wodurch eine kraftschlüssige Verbindung zwischen den glatten Elementen des Mantels und den Füllkörpern entsteht. Die elastische Hülle dichtet aber die entstehenden Bruchlinien. Es hat sich also ein Speicherkörper gebildet, der aus einer kraftschlüssigen Anordnung von mechanisch stabilen Füllkörpern und Mantelelementen, die ein schonendes Anpressen der Hülle erlauben, besteht.

Porosität und Wasserdurchlässigkeit sind wichtige Einflussgrößen eines Wasserspeichers mit Füllkörpern. In einem Grundwasserleiter, der ebenfalls aus "Füllkörpern" besteht und durch seine Wasserdurchlässigkeit charakterisiert ist, kann es Klüfte und Spalten geben, die die Wasserleitung erleichtern. Auch in einem technischen Speicher kann man derartige "Klüfte" und Spalten" vorsehen, etwa indem man in bestimmten Bereichen besonders grobkörniges Füllmaterial benutzt, dass den Wasserfluss kanalisiert.

Trotz des hohen äußeren hydrostatischen Druckes herrscht beim Befüllen oder Entleeren im Inneren 18 des Druckbehälters 20 nur der hydrostatische Druck der lokalen Wassersäule im Hohlkörper. Also wird man bei durch Füllkörper mechanisch stabilisierten Hohlkörpern umso mehr stehende längliche Gebilde bevorzugen je kleiner die Füllkörper sind.

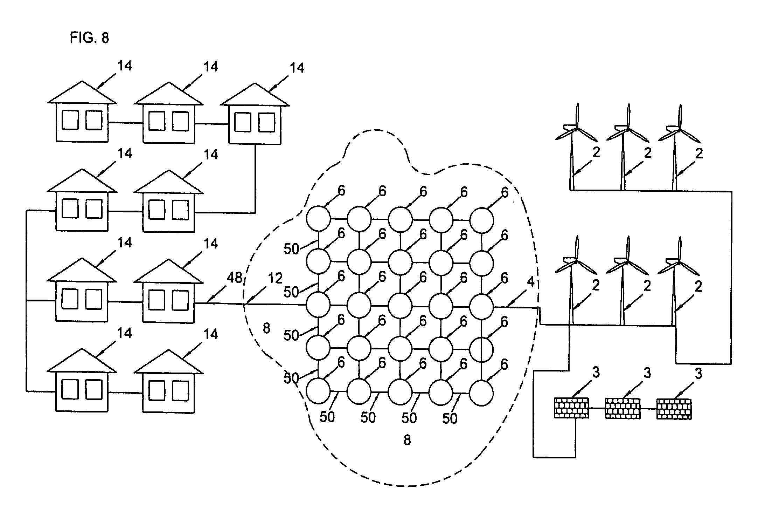

Bezugnehmend auf Fig. 8 ist ein Stromversorgungsnetz 48 mit einer Mehrzahl von miteinander vernetzten Verbrauchern 14 und einer Mehrzahl von miteinander vernetzten Windkraftanlangen 2 sowie Photovoltaikanlagen 3 dargestellt, welche die Primärkraftwerke bilden. Die von den Primärkraftwerken 2, 3 erzeugte elektrische Primärenergie wird mittels einer Vielzahl von Pumpspeicherkraftwerken 6 gemäß Fig. 2 bis 4 zwischengespeichert. Die vielen Pumpspeicherkraftwerke 6 sind auf dem Meeresgrund 8 lediglich mittels elektrischer Unterwasser-Leitungen 50 vernetzt und liefern bei Bedarf die zurückgewonnene elektrische Energie über den vorhandenen Teil 45 des Stromversorgungsnetzes 48 an die Verbraucher 14.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne die Erfindung zu verlassen. Ferner ist ersichtlich, dass die Merkmale unabhängig davon, ob sie in der Beschreibung, den Ansprüchen, den Figuren oder anderweitig offenbart sind auch einzeln wesentliche Bestandteile der Erfindung definieren, selbst wenn sie zusammen mit anderen Merkmalen gemeinsam beschrieben sind.

**Patentansprüche**

**1.** Unterwasser-Pumpspeicherkraftwerk (6) zum temporären reversiblen Zwischenspeichern von elektrischer Energie aus anderen Kraftwerken (2, 3), umfassend einen mit Wasser befüllbaren Druckbehälter (20) zum Versenken auf den Meeresgrund (8), wobei der Druckbehälter (20) derart druckfest ist, dass dieser formstabil gegen den hydrostatischen Wasserdruck ($P_T$) am Meeresgrund (8) leergepumpt werden kann,
wobei der Druckbehälter (20) einen Wasserauslass (26) aufweist mit einer an dem Druckbehälter (20) angeordneten Pumpe (16) zum Herauspumpen von Wasser aus dem Druckbehälter (20) in das umgebende Meer (22) mit dem der Wassertiefe (T) entsprechenden hydrostatischen Wasserdruck ($P_T$), wobei die Pumpe (16) beim Herauspumpen des Wassers gegen den hydrostatischen Wasserdruck ($P_T$) des umgebenden Meeres (22) elektrische Energie in entsprechende potentielle Energie der verdrängten Wassersäule umwandelt,
wobei der Druckbehälter (20) einen Wassereinlass (34) aufweist mit einem an dem Druckbehälter (20) angeordneten Generator (36) zum Einströmen lassen von Wasser unmittelbar aus dem umgebenden Meer (22) mit dem der Wassertiefe entsprechenden hydrostatischen Wasserdruck ($P_T$) in den Druckbehälter (20), wobei der Generator (36) beim Einströmen des Wassers mit dem hydrostatischen Wasserdruck ($P_T$) in der Wassertiefe (T) die potentielle Energie der vorher verdrängten Wassersäule wieder in elektrische Energie umwandelt, **gekennzeichnet durch** elektrische Leitungen (4, 12) zum Transport der elektrischen Energie von der Meeresoberfläche zu dem Druckbehälter (20) und zurück,
einen im Normalbetrieb nicht zum Energiespeichern verwendeten Wasserspeicherbereich des Druckbehälters für Ballastwasser aufweist, welcher leergepumpt wird,
um die Masse des Pumpspeicherkraftwerks derart zu verkleinern, dass es vom Meeresgrund wieder an die Meeresoberfläche aufgeholt werden kann und/oder Hohlräume im Druckbehälter zum Befüllen mit schüttbarem Beschwerungsmaterial, um den Druckbehälter zu beschweren.

2. Unterwasser-Pumpspeicherkraftwerk (6) nach Anspruch 1, umfassend ein Seil (52) mit einer Schwimmboje (54) zum Markieren der Position des Pumpspeicherkraftwerks (6) an der Meeresoberfläche und zum Absenken und Aufholen des Pumpspeicherkraftwerks (6) für Wartungs- oder Reparaturarbeiten, wenn der zusätzliche Wasserspeicherbereich (40) leergepumpt ist.

3. Unterwasser-Pumpspeicherkraftwerk (6) nach einem der vorstehenden Ansprüche,
wobei der Druckbehälter (20) ein Volumen von mindestens 100 Kubikmeter besitzt.

4. Unterwasser-Pumpspeicherkraftwerk (6) nach einem der vorstehenden Ansprüche, wobei der Druckbehälter (20) mit einer dreidimensional geschlossenen Außenwandung (28) aus Stahl und/oder Beton hergestellt ist.

5. Unterwasser-Pumpspeicherkraftwerk (6) nach einem der vorstehenden Ansprüche,
wobei das Pumpspeicherkraftwerk (6) im ausgepumpten Zustand im Normalbetrieb eine Masse hat, die zumindest nicht wesentlich kleiner ist, als die Masse des von dem Druckbehälter (20) verdrängten Wassers, so dass das Pumpspeicherkraftwerk (6) auch im ausgepumpten Zustand ohne erheblichen Verankerungsaufwand auf dem Meeresgrund (8) verbleibt.

6. Unterwasser-Pumpspeicherkraftwerk (6) nach einem der vorstehenden Ansprüche,
wobei das Beschwerungsmaterial natürliches Schüttgut ist, dessen Masse vor Ort mit in das Schüttgut eingebrachtem Wasser zusätzlich vergrößerbar ist, um den Druckbehälter (20) noch weiter zu beschweren.

7. Unterwasser-Pumpspeicherkraftwerk (6) nach einem der vorstehenden Ansprüche,
wobei der Druckbehälter (20) als druckfeste Kugel oder Ei-Form ausgebildet ist.

8. Unterwasser-Pumpspeicherkraftwerk (6) nach einem der vorstehenden Ansprüche,
wobei der Druckbehälter (20) in Form eines Torus aus einem in sich selbst geschlossenen Ring aus druckfesten Rohrstücken (56) ausgebildet ist.

9. Unterwasser-Pumpspeicherkraftwerk (6) nach einem der vorstehenden Ansprüche,
wobei der Druckbehälter (20) durch ein inneres Tragwerk (60) aus Streben (62) stabilisiert ist, um seine Druckfestigkeit zu erhöhen.

10. Unterwasser-Pumpspeicherkraftwerk (6) nach einem der vorstehenden Ansprüche,
wobei der innere Hohlraum (18) des Druckbehälters (20) mit Füllkörpern gefüllt ist, die dem Druckbehälter (20) im entleerten Zustand seine Druckfestigkeit verleihen und in Zwischenräumen ein Speichervolumen für das Wasser verbleiben lassen.

11. Unterwasser-Pumpspeicherkraftwerk (6) nach einem der vorstehenden Ansprüche,
wobei die Pumpe (16) und der Generator (36) als eine gemeinsame Pumpturbine an einem kombinierten Wassereinlass und -auslass ausgebildet sind.

12. Stromversorgungsnetz (48) umfassend:

eine Vielzahl von Primärkraftwerken, welche zeitlich schwankend elektrische Energie erzeugen, insbesondere Windkraftanlagen (2) und/oder Photovoltaikanlagen (3),
zumindest ein Unterwasser-Pumpspeicherkraftwerk (6) nach einem der vorstehenden Ansprüche,
eine Vielzahl von Verbrauchsstellen (14) für elektrische Energie,
ein elektrisches Leitungsnetz (4, 12), welches die Verbrauchsstellen, das zumindest eine Unterwasser-Pumpspeicherkraftwerk und die Primärkraftwerke miteinander verbindet, so dass die von den Primärkraftwerken (2, 3) erzeugte elektrische Energie zu Zeiten eines Energieüberschusses aus den Primärkraftwerken (2, 3) von dem zumindest einen Unterwasser-Pumpspeicherkraftwerk (6) reversibel zwischengespeichert und zu Zeiten hohen Bedarfs an elektrischer Energie zurückgewonnen und die zurückgewonnene elektrische Energie zu den Verbrauchsstellen (14) geleitet werden kann.

13. Verfahren zum temporären reversiblen Zwischenspeichern von elektrischer Energie aus Primärkraftwerken (2, 3), mit einem Unterwasser-Pumpspeicherkraftwerk (6) mit einem künstlichen mit Wasser befüllbaren auf den Meeresgrund (8) versenkten Druckbehälter (20), wobei der Druckbehälter (20) derart druckfest ist, dass er formstabil gegen den hydrostatischen Wasserdruck ($P_T$) am Meeresgrund (8) leergepumpt werden kann,
wobei zum Speichern der elektrischen Energie Wasser aus dem Druckbehälter (20) unmittelbar in das umgebende Meer (22) mit dem der Wassertiefe entsprechenden hydrostatischen Wasserdruck ($P_T$) herausgepumpt wird, wobei elektrische Energie in die der Wassersäule in der Wassertiefe (T) entsprechende potentielle Energie umgewandelt wird,
wobei zum Wiedergewinnen der elektrischen Energie Wasser unmittelbar aus dem umgebenden Meer (22) mit dem der Wassertiefe (T) entsprechenden hydrostatischen Wasserdruck ($P_T$) in den Druckbehälter (20) einströmt, die dem hydrostatischen Wasserdruck ($P_T$) der Wassersäule in der Wassertiefe entsprechende potentielle Energie mittels eines Generators (36) in elektrische Energie umgewandelt wird,
**gekennzeichnet dadurch,**
**dass** die elektrische Energie mittels elektrischer Leitungen (4, 12) von der Meeresoberfläche zum temporären reversiblen Zwischenspeichern zu dem Druckbehälter (20) hinuntergeleitet und zum Verbrauchen von dem Druckbehälter (20) wieder zur Meeresoberfläche zurückgeleitet wird,
**dass** der Druckbehälter einen im Normalbetrieb nicht zum Energiespeichern verwendeten Wasserspeicherbereich für Ballastwasser aufweist, welcher leergepumpt werden kann, um die Masse des Pumpspeicherkraftwerks derart zu verkleinern, dass es vom Meeresgrund wieder an die Meeresoberfläche aufgeholt werden kann und/oder dass der Druckbehälter Hohlräume zum Befüllen mit schüttbarem Beschwerungsmaterial aufweist, um den Druckbehälter zu beschweren.

14. Verfahren nach dem vorstehenden Anspruch,
wobei das Pumpspeicherkraftwerk (6) zunächst so austariert wird, dass seine Masse geringer ist, als die Masse des verdrängten Wassers, so dass das Pumpspeicherkraftwerk (6) zunächst schwimmt und die Masse des Pumpspeicherkraftwerks (6) durch Einfüllen von Schüttgut und/oder Ballastwasser in den Druckbehälter (20) am Versenkungsort so weit vergrößert wird, dass die Masse des Pumpspeicherkraftwerks (6) größer wird, als die Masse des verdrängten Wassers und das Pumpspeicherkraftwerks (6) versinkt und am Meeresgrund (8) zu liegen kommt.

**Claims**

1. An underwater pumped storage power plant (6) for temporary reversible intermediate storage of electric energy from other power stations (2, 3), comprising a pressure tank (20) that can be filled with water and can be lowered to the floor (8) of an ocean, wherein said pressure tank (20) has a pressure-resistant design so that it can be pumped out while remaining dimensionally stable against the hydrostatic pressure ($P_T$) on the ocean floor (8);
wherein the pressure tank (20) has a water outlet (26) with a pump (16) arranged at the pressure tank (20) for pumping water out of the pressure tank (20) and into the surrounding ocean (22) against the hydrostatic water pressure ($P_T$) corresponding to the water depth (T), wherein by pumping out water against the hydrostatic water pressure ($P_T$) of the surrounding ocean (22) the pump (16) converts electric energy into potential energy corresponding to the displaced water column,
wherein the pressure tank (20) has a water inlet (34) with a generator (36) arranged at the pressure tank (20) for allowing water to flow directly from the surrounding ocean (22) into the pressure tank (20) with the hydrostatic water pressure ($P_T$) corresponding to the water depth, wherein when the water flows in with the hydrostatic water pressure ($P_T$) at the water depth (T) the generator (36) converts the potential energy of the previously displaced water column back into electric energy,
**characterized by**
power lines (4, 12) for transporting the electric energy from the ocean surface to the pressure tank (20) and back;
a water storage area of the pressure tank for ballast water, which during normal operation is not used for storing energy, which water storage area is pumped out to reduce the mass of the pumped storage power plant to the extent that it can be brought from the ocean floor back to the ocean surface; and/or
hollow spaces in the pressure tank for being filled with pourable ballast material in order to increase the weight of the pressure tank.

2. The underwater pumped storage power plant (6) according to claim 1, comprising a rope (52) with a floating buoy (54) for marking the position of the pumped storage power plant (6) on the ocean surface and for lowering the pumped storage power plant (6) and for pulling it up to perform maintenance and/or repair work after the additional water storage area (40) has been pumped out.

3. The underwater pumped storage power plant (6) according to any of the preceding claims, wherein the pressure tank (20) has a volume of at least 100 cubic meters.

4. The underwater pumped storage power plant (6) according to any of the preceding claims, wherein the pressure tank (20) has been provided with a three-dimensionally closed outer wall (28) made of steel and/or concrete.

5. The underwater pumped storage power plant (6) according to any of the preceding claims, wherein in a pumped-out state during normal operation the pumped storage power plant (6) has a mass that is at least not considerably smaller than the mass of the water displaced by the pressure tank (20), so that the pumped storage power plant (6) remains on the ocean floor (8) even in said pumped-out state during normal operation, without extensive anchoring.

6. The underwater pumped storage power plant (6) according to any of the preceding claims, wherein the ballast material comprises natural bulk material whose mass can be increased on-site by adding water to said bulk material, so as to further increase the weight of the pressure tank (20).

7. The underwater pumped storage power plant (6) according to any of the preceding claims, wherein the pressure tank (20) has a pressure-resistant spherical or oval design.

8. The underwater pumped storage power plant (6) according to any of the preceding claims, wherein the pressure tank (20) is designed in form of a torus made of a ring that is closed in itself and consists of pressure-resistant pipe sections (56).

9. The underwater pumped storage power plant (6) according to any of the preceding claims, wherein the pressure tank (20) is stabilized by means of an internal supporting structure (60) comprising bars (62) in order to increase its pressure resistance.

10. The underwater pumped storage power plant (6) according to any of the preceding claims, wherein the internal cavity (18) of the pressure tank (20) is filled with filling elements which provide the pressure tank (20) with its pressure resistance while said pressure tank is in the emptied state, and which filling elements leave a storage volume for water in gaps therebetween.

11. The underwater pumped storage power plant according to any of the preceding claims, wherein the pump (16) and the generator (36) are provided as a common pumpturbine at a combined water inlet and outlet.

12. A power supply network (48), comprising:

  a plurality of primary power stations, which generate electric energy that is fluctuating over time, in particular wind power stations (2) and/or photovoltaic systems (3);
  at least one underwater pumped storage power plant (6) according to any of the preceding claims;
  a plurality of consumption sites (14) of electric energy;
  an electric supply network (4, 12) which connects the consumption sites, the at least one underwater pumped storage power plant and the primary power stations so that in times of excess electric energy by the primary power stations (2, 3) the electric energy generated by the primary power stations (2, 3) can be temporarily stored reversibly by the at least one underwater pumped storage power plant (6), and in times of increased power demand said electric energy can be recovered and the recovered electric energy can be directed to the consumption sites (14).

13. A method for temporary reversible intermediate storage of electric energy from primary power stations (2, 3) using an underwater pumped storage power plant (6) with an artificial pressure tank (20) that can be filled with water and lowered to the floor (8) of an ocean, wherein the pressure tank (20) has been designed in a pressure-resistant manner so that it can be pumped out while remaining dimensionally stable against the hydrostatic water pressure ($P_T$) on the ocean floor (8); wherein for the purpose of storing the electric energy, water is pumped out of the pressure tank (20) directly into the surrounding ocean (22) having the hydrostatic pressure ($P_T$) corresponding to the water depth, wherein electric energy is converted into potential energy corresponding to the water column at the water depth (T); wherein for the purpose of recovering the electric energy, water from the surrounding ocean (22) directly flows into the pressure tank (20) with the hydrostatic water pressure ($P_T$) corresponding to the water depth (T), and by means of a generator (36) the potential energy corresponding to the hydrostatic water pressure ($P_T$) of the water column in the water depth is converted into electric energy,
**characterized in**
**that** by means of power lines (4, 12), the electric energy is directed from the ocean surface down to the pressure tank (20) for temporary reversible intermediate storage, and is directed from the pressure tank (20) back to the ocean surface for consumption;
**that** the pressure tank has a water storage area for ballast water, which during normal operation is not used for storing energy and which can be pumped out to reduce the mass of the pumped storage power plant to the extent that it can be brought from the ocean floor back to the ocean surface; and/or
**that** the pressure tank comprises hollow spaces for being filled with pourable ballast material in order to increase the weight of the pressure tank.

14. The method according to the preceding claim, wherein the pumped storage power plant (6) is initially balanced in such a way that its mass is smaller than the mass of the displaced water so that the pumped storage power plant (6) initially floats, and wherein by filling bulk material and/or ballast water into the pressure tank (20) at an intended site of sinking, the mass of the pumped storage power plant (6) is increased to the extent that the mass of the pumped storage power plant (6) becomes greater than the mass of the displaced water, so that the pumped storage power plant (6) sinks down and comes to rest on the ocean floor (8).

**Revendications**

1. Centrale sous-marine à accumulation par pompage (6) destinée au stockage temporaire provisoire réversible d'énergie électrique provenant d'autres centrales électriques (2, 3), comprenant un réservoir sous pression (20) susceptible d'être rempli d'eau et destiné à être immergé sur les fonds marins (8), le réservoir sous pression (20) ayant une résistance à la pression telle qu'il puisse être vidé par pompage en conservant une forme stable vis-à-vis de la pression d'eau hydrostatique ($P_T$) sur les fonds marins (8),
le réservoir sous pression (20) présentant une sortie d'eau (26) dotée d'une pompe (16) disposée sur le réservoir sous pression (20) et destinée à évacuer l'eau du réservoir sous pression (20) par pompage dans la mer environnante (22), avec la pression d'eau hydrostatique ($P_T$) correspondant à la profondeur d'eau (T), sachant que la pompe (16), lors de l'évacuation de l'eau par pompage à l'encontre de la pression d'eau hydrostatique ($P_T$) de la mer environnante (22), transforme de l'énergie électrique en énergie potentielle correspondante de la colonne d'eau déplacée,
le réservoir sous pression (20) présentant une admission d'eau (34) dotée d'un générateur (36) disposé sur le réservoir sous pression (20) et destiné à laisser entrer l'eau dans le réservoir sous pression (20) directement depuis la mer environnante (22), avec la pression d'eau hydrostatique ($P_T$) correspondant à la profondeur d'eau, sachant que le générateur (36), lors de l'admission de l'eau à la pression d'eau hydrostatique ($P_T$) à la profondeur d'eau (T), transforme l'énergie potentielle de la colonne d'eau précédemment déplacée de nouveau en énergie électrique.
**caractérisée en ce qu'**elle comporte
des lignes électriques (4, 12) destinées au transport de l'énergie électrique depuis la surface de la mer au réservoir sous pression (20) et inversement,
une zone de stockage d'eau du réservoir sous pression qui n'est pas destinée au stockage d'énergie en service normal mais est destinée à l'eau de lestage et est vidée par pompage afin de réduire la masse de la centrale à accumulation par pompage, de manière à ce qu'elle puisse être ramenée depuis les fonds marins à la surface de la mer, et/ou
des cavités dans le réservoir sous pression, destinées à être remplies avec un matériau de lestage en vrac, afin de lester le réservoir sous pression.

2. Centrale sous-marine à accumulation par pompage (6) selon la revendication 1, comprenant un câble (52) avec une bouée (54) pour indiquer la position de la centrale à accumulation par pompage (6) à la surface de la mer et pour immerger et remonter la centrale à accumulation par pompage (6) en vue de travaux d'entretien ou de réparation, lorsque la zone de stockage d'eau (40) supplémentaire est vidée par pompage.

3. Centrale sous-marine à accumulation par pompage (6) selon l'une des revendications précédentes, dans laquelle le réservoir sous pression (20) a un volume d'au moins 100 mètres cubes.

4. Centrale sous-marine à accumulation par pompage (6) selon l'une des revendications précédentes, dans laquelle le réservoir sous pression (20) est réalisé à partir d'acier et/ou de béton, avec une paroi extérieure (28) fermée de façon tridimensionnelle.

5. Centrale sous-marine à accumulation par pompage (6) selon l'une des revendications précédentes, dans laquelle la centrale à accumulation par pompage (6), à l'état vidé par pompage, présente en service normal une masse qui n'est pour le moins pas sensiblement inférieure à la masse de l'eau déplacée par le réservoir sous pression (20), de sorte que la centrale à accumulation par pompage (6) reste posée sur les fonds marins (8) également à l'état vidé par pompage, sans opérations d'ancrage importantes.

6. Centrale sous-marine à accumulation par pompage (6) selon l'une des revendications précédentes, dans laquelle le matériau de lestage est un matériau naturel en vrac dont la masse peut encore être augmentée sur place avec de l'eau introduite dans le matériau en vrac, afin de lester davantage le réservoir sous pression (20).

7. Centrale sous-marine à accumulation par pompage (6) selon l'une des revendications précédentes, dans laquelle le réservoir sous pression (20) est réalisé comme sphère ou comme ovoïde résistant à la pression.

8. Centrale sous-marine à accumulation par pompage (6) selon l'une des revendications précédentes, dans laquelle le réservoir sous pression (20) est réalisé sous la forme d'un tore à partir d'un anneau fermé sur lui-même, constitué de tronçons de tube (56) résistant à la pression.

9. Centrale sous-marine à accumulation par pompage (6) selon l'une des revendications précédentes, dans laquelle le réservoir sous pression (20) est stabilisé par une structure porteuse (60) interne constituée d'étais (62), afin d'augmenter sa résistance à la pression.

10. Centrale sous-marine à accumulation par pompage (6) selon l'une des revendications précédentes, dans laquelle la cavité (18) interne du réservoir sous pression (20) est remplie de corps de remplissage qui confèrent au réservoir sous pression (20) sa résistance à la pression, lorsqu'il est à l'état vide, et laissent subsister dans des interstices un volume de stockage pour l'eau.

11. Centrale sous-marine à accumulation par pompage (6) selon l'une des revendications précédentes, dans laquelle la pompe (16) et le générateur (36) sont réalisés comme une pompe-turbine commune sur une admission et une sortie d'eau combinée.

12. Réseau d'alimentation électrique (48) comprenant :

une pluralité de centrales primaires qui produisent de l'énergie électrique de façon fluctuante dans le temps, en particulier des éoliennes (2) et/ou des panneaux photovoltaïques (3),
au moins une centrale sous-marine à accumulation par pompage (6) selon l'une des revendications précédentes, une pluralité de points de consommation (14) d'énergie électrique,
un réseau de lignes électriques (4, 12) qui relie entre eux les points de consommation, la centrale sous-marine à accumulation par pompage, au nombre d'au moins une, et les centrales primaires, de sorte que lors de périodes d'excédents d'énergie provenant des centrales primaires (2, 3), l'énergie électrique produite par les centrales primaires (2, 3) peut être stockée temporairement de façon réversible par la centrale sous-marine à accumulation par pompage (6), au nombre d'au moins une, et peut être récupérée pendant des périodes de demande forte d'énergie électrique, et l'énergie électrique récupérée peut être transmise aux points de consommation (14).

13. Procédé de stockage temporaire provisoire réversible d'énergie électrique provenant de centrales primaires (2, 3), comprenant une centrale sous-marine à accumulation par pompage (6) dotée d'un réservoir sous pression (20) artificiel, immergé sur les fonds marins (8) et pouvant être rempli avec de l'eau, le réservoir sous pression (20) présentant une résistance à la pression telle qu'il puisse être vidé par pompage en conservant une forme stable vis-à-vis de la pression d'eau hydrostatique ($P_T$) sur les fonds marins (8),
sachant que pour le stockage de l'énergie électrique, l'eau est pompée hors du réservoir sous pression (20), directement dans la mer environnante (22), avec la pression d'eau hydrostatique ($P_T$) correspondant à la profondeur d'eau, l'énergie électrique étant transformée en énergie potentielle correspondant à la colonne d'eau à la profondeur d'eau (T),
sachant que pour la récupération de l'énergie électrique, l'eau s'écoule directement de la mer environnante (22) dans le réservoir sous pression (20), avec la pression d'eau hydrostatique ($P_T$) correspondant à la profondeur d'eau (T), l'énergie potentielle, correspondant à la pression d'eau hydrostatique ($P_T$) de la colonne d'eau à la profondeur d'eau, étant transformée en énergie électrique au moyen d'un générateur (36),
**caractérisé en ce que**

l'énergie électrique est transmise au moyen de lignes électriques (4, 12) depuis la surface de la mer vers le fond, jusqu'au réservoir sous pression (20), en vue du stockage temporaire provisoire réversible, et, pour la consommation, est retransmise du réservoir sous pression (20) à la surface de la mer,

le réservoir sous pression présente une zone de stockage d'eau pour de l'eau de lestage, qui n'est pas utilisée pour le stockage d'énergie en service normal et qui peut être vidée par pompage afin de réduire la masse de la centrale à accumulation par pompage de manière à ce qu'elle puisse être ramenée depuis les fonds marins à la surface de la mer, et/ou

**en ce que** le réservoir sous pression présente des cavités destinées à être remplies avec un matériau de lestage en vrac, afin de lester le réservoir sous pression.

14. Procédé selon la revendication précédente, selon lequel la centrale à accumulation par pompage (6) est d'abord équilibrée de manière à ce que sa masse soit plus faible que la masse de l'eau déplacée, de sorte que la centrale à accumulation par pompage (6) flotte d'abord, et la masse de la centrale à accumulation par pompage (6) est augmentée, sur le lieu d'immersion, par remplissage du réservoir sous pression (20) avec des matériaux en vrac et/ou de l'eau de lestage, de manière telle que la masse de la centrale à accumulation par pompage (6) devienne supérieure à la masse de l'eau déplacée et la centrale à accumulation par pompage (6) soit immergée et vienne se poser sur les fonds marins (8).

EP 2 683 933 B1

FIG. 1

FIG. 2

FIG. 3

FIG. 4

FIG. 5

EP 2 683 933 B1

FIG. 6

FIG. 7

FIG. 8

EP 2 683 933 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2843675